# EUROPÄISCHE PATENTSCHRIFT

(11) **EP 1 197 309 B1**
(45) Veröffentlichungstag und Bekanntmachung des Hinweises auf die Patenterteilung: **07.04.2004**
(21) Anmeldenummer: 00810918.3
(22) Anmeldetag: 04.10.2000
(51) Int. Cl.: B29C 33/52, B29C 70/48

(54) **Verfahren zur Herstellung von Bauteilen aus Faserverbundkunststoffen**
Method of manufacturing fibre reinforced composite structural elements
Procédé de fabrication des éléments de construction en matière plastique renforcés par des fibres

(43) Veröffentlichungstag der Anmeldung: 17.04.2002
(73) Patentinhaber: Alcan Technology & Management AG, 8212 Neuhausen am Rheinfall (CH)
(72) Erfinder: Lenherr, Otto, 9325 Roggwil (CH)

(56) Entgegenhaltungen:
- US-A- 4 248 817
- PATENT ABSTRACTS OF JAPAN vol. 010, no. 163 (M-487), 11. Juni 1986 (1986-06-11) & JP 61 016817 A (MITSUBISHI JUKOGYO KK), 24. Januar 1986 (1986-01-24)
- PATENT ABSTRACTS OF JAPAN vol. 1996, no. 04, 30. April 1996 (1996-04-30) & JP 07 314477 A (MATSUSHITA ELECTRIC WORKS LTD), 5. Dezember 1995 (1995-12-05)

## Beschreibung

Vorliegende Erfindung betrifft ein Verfahren zur Herstellung von einteiligen Faserverbundbauteilen mit wenigstens einem geschlossenen oder hinterschnittenen Hohlraum nach dem Oberbegriff des Anspruchs 1. Ferner betrifft die Erfindung die Herstellung des Stützkerns sowie eine Vorrichtung zur Ausführung des erfindungsgemässen Verfahrens sowie nach dem erfindungsgemässen Verfahren hergestellte Faserverbundbauteile.

Faserverbundbauteile sind Bauteile aus Faserverbundkunststoffen. Sie erlangen wegen ihres verhältnismässig geringen Gewichtes und ihrer durch das Einbringen von Fasern begründeten hohen Festigkeit, insbesondere im Schienen- und Strassenfahrzeugbau, im Flugzeugbau, in der Raumfahrt, in der Bautechnik bzw. im Leichtbau, z.B. zur Verstärkung von Baukonstruktionen, oder in Sportgeräten einen immer höheren Stellenwert. Faserverbundbauteile kommen ferner zunehmend als strukturell tragende Bauteile in den oben genannten Anwendungsgebieten zum Einsatz, wobei solche Faserverbundbauteile vielfach äusserst komplexe dreidimensionale, geometrische Formen aufweisen.

Die Herstellung von Faserverbundbauteilen erfolgt zu einem bedeutenden Teil nach folgendem Prinzip: Verstärkungsfasern, welche z.B. als vorgeformte Fasergebilde, nachfolgend Faserrohlinge genannt, vorliegen, werden mit fliessfähigen Komponenten, insbesondere fliessfähigen Kunststoffen, nachfolgend Kunststoffmatrix genannt, imprägniert. Die mit der Kunststoffmatrix getränkten Verstärkungsfasern, nachfolgend Faserverbund-Formmasse bezeichnet, wird einem Formgebungsprozess unterzogen und in der Regel unter Wärme und/oder Druck ausgehärtet.

Ein bekanntes Herstellungsverfahren ist beispielsweise das sogenannte Harz-Fliessform-Verfahren, auch Resin-Transfer-Molding-Verfahren (RTM-Verfahren) genannt, wie es z.B. in "Kötte, 'Der Resin-Transfer-Molding-Prozess', Verlag TÜV Rheinland, 1991, S. 3-16" beschrieben ist.

Im RTM-Verfahren wird die Kavität eines geöffneten, mehrteiligen Formwerkzeuges wenigstens mit Verstärkungsfasern, insbesondere mit Fasergebilden, und fallsweise weiteren Komponenten beschickt. In die Formwerkzeugkavität des geschlossenen Formwerkzeuges wird in einem nachfolgenden Schritt eine duro- oder thermoplastische Kunststoffmatrix unter Ausbildung einer Faserverbund-Formmasse injiziert. In einem abschliessenden Schritt wird die Faserverbund-Formmasse zur Aushärtung bzw. zur Polymerisation gebracht und das formstabile Faserverbundbauteil entformt.

Im RTM-Verfahren werden mittlerweile, wie oben erwähnt, neben duroplastischen Harzen auch thermoplastische Kunststoffe verarbeitet, weswegen der Ausdruck RTM-Verfahren in den nachfolgenden Ausführungen als Bezeichnung für das oben umschriebene Verfahren unabhängig der verwendeten Kunststoffmatrix steht.

Das RTM-Verfahren ermöglicht die serienmässige Herstellung von einteiligen Faserverbundbauteilen mit komplexen, dreidimensionalen Geometrien, wobei unter einem einteiligen Bauteil ein in einem Stück gefertigtes, nicht-gefügtes Bauteil zu verstehen ist. Dank dem RTM-Verfahren können insbesondere einteilige Faserverbundbauteile serienmässig in Sandwich-Bauweise gefertigt werden, das heisst die Faserverbundbauteile enthalten eine Verstärkungskern beispielsweise aus einem Schaumkörper.

Während die Sandwich-Bauweise im RTM-Verfahren technisch weit entwickelt ist und eine grosse Verbreitung gefunden hat, ist die serienmässige Herstellung von einteiligen, reproduzierbaren Faserverbundbauteilen mit geschlossenen oder hinterschnittenen Hohlräumen nach wie vor mit fertigungstechnischen Problemen behaftet, dies insbesondere dann, wenn die Faserverbundbauteile strengen Toleranzkriterien genügen müssen. Deshalb erfolgt der Einsatz von Verstärkungskernen, also die Sandwich-Bauweise, oftmals nicht aus strukturellen sondern aus fertigungstechnischen Gründen, so dass das Faserverbundbauteil ein ungewollt hohes Gewicht erreicht und ferner Kosten zur Anfertigung solcher Verstärkungskerne getragen werden müssen.

Dreidimensionale Faserverbundbauteile mit Hohlräumen werden heute in der Regel in der Zweischalentechnologie gefertigt, d.h. es werden, beispielsweise in einem RTM-Verfahren, zwei getrennte Faserverbundbauteile als Halbschalen gefertigt, die mittels Schweiss- oder Klebverbindung zum kompletten Faserverbundbauteil gefügt werden.

Solche gefügten Faserverbundbauteile enthalten jedoch sichtbare und deshalb unerwünschte Fügenähte, die nur mit grossem Nachbearbeitungsaufwand optisch korrigiert werden können. Ferner sind solche Fügenähte strukturelle Schwachstellen, d.h. sie neigen z.B. zu Alterungs- und Belastungs-bedingter Rissbildung.

Die US 4,248,817 beschreibt ein Verfahren zur Herstellung von faserverstärkten Kunststoffbauteilen mit einem Hohlraum, wobei die Geometrie des Hohlraums während der Herstellung des Bauteils durch einen Wachs-Kern vorgegeben wird, welcher beim Aushärten des Bauteils ausgeschmolzen wird.

Aufgabe vorliegender Erfindung ist deshalb ein kostengünstiges Verfahren, insbesondere ein RTM-Verfahren, zur serienmässigen Herstellung von Faserverbundbauteilen von hoher Qualität und geringen Mass- und Formtoleranzen mit wenigstens einem geschlossenem oder hinterschnittenen Hohlraum.

Erfindungsgemäss wird die Aufgabe durch die kennzeichnenden Merkmale der Ansprüche 1, 15,23 und 24 gelöst.

Die Erfindung betrifft explizit auch ein Verfahren zur Herstellung eines Stützkerns zur Verwendung in einem Verfahren, insbesondere in einem Harz-Fliessform- oder RTM-Verfahren, zur Herstellung von Faserverbundbauteilen, welches sich dadurch auszeichnet, dass der Stützkern ein über der Raumtemperatur ausschmelzbarer Formkörper ist und mittels plastischer Umformung aus einer an sich Formstabilen Stützkern-Formmasse oder einem Vorformling hergestellt wird.

Der Begriff "geschlossener Hohlraum" schliesst in diesem Text ebenfalls Hohlräume mit verhältnismässig kleinen Öffnungen, wie z.B. Ausschmelzöffnungen, mit ein.

Unter plastischem Umformen ist die Verformung eines an sich formstabilen, festen Körpers unter seiner Schmelztemperatur durch Anwendung äusserer Kräfte, insbesondere Druckkräfte, zu verstehen, wobei der Umformvorgang einen Materialfluss bewirkt. Der Körper erfährt bei der plastischen Umformung eine dauernde Formänderung und nimmt nicht wieder seine ursprüngliche Form an, wenn die verformenden äusseren Kräfte zu wirken aufhören.

Die Stützkern-Formmasse oder der Vorformling bzw. Stützkem weist zweckmässig eine Schmelztemperatur von wenigstens 50°C, vorzugsweise wenigstens 75°C, insbesondere wenigstens 85°C und vorteilhaft von wenigstens 90°C und von höchstens 200°C, vorzugsweise von höchstens 130°C, insbesondere von höchstens 120°C und vorteilhaft von höchstens 110°C auf und geht bei Erreichen der vorgenannten Schmelztemperatur in einen schmelzflüssigen, niedrigviskosen Zustand über.

Der herzustellende Stützkern wird vorzugsweise in einem ersten Schritt als Vorformling in einer Giessform gegossen. Die Form des Vorformlings ist vorzugsweise solcherweise, dass die Fliesswege des in die Kontur der Kavität zu pressenden Materials möglichst gering sind. Der Vorformling wird deshalb vorzugsweise in einer Roh- oder Grobform der Endform des Stützkerns gegossen.

Die Giessform kann eine geschlossene Giessform sein, bei welcher die Schmelze über eine Eingussöffnung in die Giessform gebracht wird. Die Giessform kann überdies einen Steiger zur Aufnahme eines Schmelzüberschusses enthalten, welcher zur Kompensation des durch die Abkühlung auftretenden Materialschwundes in der Giessform dient. Ferner kann die Giessform eine offene, insbesondere eine schalenförmige Giessform sein, in welcher die Schmelze einen Giessspiegel ausbildet, der zu einer planen Fläche des Vorformlings wird. Die Giessform besteht z.B. aus oder enthält Metall, beispielsweise Aluminium oder Stahl, keramische Werkstoffe, und vorzugsweise Kunststoff bzw. verstärkten Kunststoff.

Der Vorformling kann vor und/oder nach der plastischen Umformung zum endgeformten Stützkern noch weiteren, z.B. spanenden Bearbeitungsschritten unterzogen werden. Der gegossene und gegebenenfalls nachbearbeitete Vorformling wird in weiteren Verfahrensschritten mittels plastischer Umformung in den endgeformten Stützkern überführt. Der Vorformling weist dabei gegenüber dem endgeformten Stützkern vorzugsweise einen Massen-überschuss oder wenigstens dieselbe Masse auf.

Die mittlere Temperatur während der plastischen Umformung des Vorformlings ist tiefer als seine Schmelztemperatur und liegt in einem zur plastischen Umformung geeigneten Bereich. Der Vorformling ist zweckmässig bei einer Temperatur von grösser 20°C, vorzugsweise von grösser 30°C, insbesondere von grösser 40°C und vorteilhaft von grösser 50°C bis zum Erreichen der oben genannten Schmelztemperatur knetbar oder plastisch umformbar. Der Stützkern ist insbesondere in einem Temperaturbereich von 50 bis 60°C plastisch umformbar.

Der Vorformling wird zweckmässig bei einer mittleren Temperatur von grösser als 20°C, vorzugsweise von grösser als 35°C, insbesondere von grösser als 50°C plastisch umgeformt. Die genannte Umformtemperatur ist ferner zweckmässig kleiner als 100°C, vorzugsweise kleiner als 80°C und insbesondere kleiner als 65°C.

Der Vorformling wird vorzugsweise mittels Fliesspressen zum Stützkern umgeformt. Der Vorformling wird insbesondere in einem, eine Pressformwerkzeugkavität ausbildenden Pressformwerkzeug plastisch umgeformt. Der Vorformling wird beispielsweise in einem mehrteiligen, insbesondere zweiteiligen, eine Pressformwerkzeugkavität ausbildenden Pressformwerkzeug umgeformt, wobei der Vorformling in die geöffnete Pressformwerkzeugkavität eingelegt und durch Zusammenführen der Pressformwerkzeugteile und Schliessen des Pressformwerkzeuges in die Kontur der Pressformwerkzeugkavität verpresst wird. Die Pressformwerkzeugkavität wiedergibt zweckmässig die Form des im Faserverbundbauteil vorgesehenen Hohlraums. Die plastische Umformung ist zweckmässig mit dem vollständigen Schliessen des Formwerkzeuges abgeschlossen.

Die Ausgestaltung des Pressformwerkzeuges ist abhängig von der Formgebung des Stützkerns. Die Pressformwerkzeugteile können beispielsweise Teilkavitäten beinhalten, welche beim Schliessen des Pressformwerkzeuges eine geschlossene Pressformwerkzeugkavität ausbilden. Ferner können einzelne Pressformwerkzeugteile auch als beim Schliessen des Pressformwerkzeuges unter Ausbildung eines Hohlraumes in die Kavität komplementärer Pressformwerkzeugteile vordringende Stempel ausgebildet sein.

In bevorzugter Ausführung des Verfahrens wird der Vorformling in ein zweiteiliges, eine Pressformwerkzeugkavität ausbildendes, geöffnetes Pressformwerkzeug eingelegt, wobei die Pressformwerkzeugteile Teilkavitäten ausbilden und die Pressformwerkzeugkavität die Hohlraumform im vorgesehenen Faserverbundbauteil wiedergibt. Durch Schliessen des Pressformwerkzeuges und Ausübung eines Pressdruckes wird der Vorformling in die Kontur der Pressformwerkzeugkavität gedrückt und zu einem Stützkern umgeformt, wobei mit dem vollständigen Schliessen des Pressformwerkzeuges der Umformvorgang abgeschlossen ist.

Die Geschwindigkeit des Umformvorganges bzw. die Schliessgeschwindigkeit des Pressformwerkzeuges ist vom plastischen Verhalten bzw. der Plastizität des Vorformlings abhängig und so zu wählen, dass der Vorformling kein sprödes Verhalten zeigt und Rissbildung verhindert wird. Die plastische Umformung des Vorformlings zum endgeformten Stützkern kann z.B. weniger als eine Minute dauern.

Die plastische Umformung bzw. das Fliesspressen kann in mehreren Schritten ausgeführt werden, wobei die Umformschritte ein Vorpressen des Vorformlings, z.B. durch Teilschliessen des Formwerkzeuges, und ein anschliessendes Nachpressen, z.B. durch vollständiges Schliessen des Formwerkzeuges, in die endgültige Form des Stützkerns umfassen können. Die genannte Methode des Fliesspressens erlaubt insbesondere eine formgenaue Ausbildung von hinterschnittenen Strukturen.

Das Pressformwerkzeug bzw. die formgebende Schale des Pressformwerkzeuges ist beispielsweise aus einem Metall oder einer Metalllegierung, wie Aluminium oder Stahl, einem keramischen Werkstoff und vorzugsweise aus einem Kunststoff oder verstärkten Kunststoff. Das Pressformwerkzeug enthält Verdrängungsöffnungen, durch welche überschüssiges Material des Vorformling während der plastischen Umformung ausfliesst und die Pressformwerkzeugkavität verlasst. Die Verdrängungsöffnungen können. in Verdrängungskammern, in einen die Pressformwerkzeugkavität geschlossen umgebenden Verdrängungskanal führen, welcher an der Fügestelle zwischen zwei Pressformwerkzeughälften angeordnet ist. Die Verdrängungskammern bzw. der Verdrängungskanal nimmt das aus der Pressformwerkzeugkavität fliessende, überschüssige Material auf.

Ferner enthält das Pressformwerkzeug Entlüftungsöffnungen zur Abführung eingeschlossener Lufttaschen. Die Entlüftungsöffnungen sind zweckmässig Rundöffnungen mit einem verhältnissmässig kleinen Durchmesser von z.B. 0,5 - 3 mm. Die Entlüftungsöffnungen werden zwar nach dem Austritt sämtlicher Luft mit nachfliessendem Material des Vorformlings verstopft, da jedoch bei der Fertigung des nächsten Stützkerns zwischen der eingeschlossenen Luft und der Aussenatmosphäre mit steigendem Pressdruck ein zunehmendes Druckgefälle aufgebaut wird, wird bei Überschreiten eines kritischen Überdruckes das die Entlüftungsöffnung verstopfende Material durch die eingeschlossene Luft explosionsartig aus der Entlüftungsöffnung ausgestossen.

Das Pressformwerkzeug bzw. die Pressformwerkzeugkavität wird zwecks Herstellung des Stützkems zweckmässig beheizt und auf eine erhöhte Temperatur von beispielsweise grösser als 25°C, vorzugsweise von grösser als 30°C, insbesondere von grösser als 35°C und vorteilhaft von grösser 45°C und von kleiner als 75°C, vorzugsweise von kleiner als 65°C, insbesondere von kleiner als 55°C gebracht. Das Pressformwerkzeug kann integrierte Mittel zu seiner Beheizung enthalten oder vor dem Umformvorgang, beispielsweise in einem Ofen, erwärmt werden. Die optimale Aufheiztemperatur des Pressformwerkzeuges hängt im Wesentlichen von der Werkstoff-Beschaffenheit des Vorformlings und der Pressformwerkzeugkavität ab und muss individuell und verfahrensspezifisch bestimmt werden. Allgemein können sich bei zu niedriger Temperatur der Pressformwerkzeugkavität während der Umformung an der Oberfläche des Stützkerns Risse ausbilden, während bei einer zu hohen Temperatur der Pressformwerkzeugkavität der Stützkern in der Pressformwerkzeugkavität haften bleibt und schwer entformbar ist.

Der Stützkern kann in weiterer Ausführung der Erfindung auch mittels einer Extrudervorrichtung in wenigstens einem plastischen Umformschritt aus einer Stützkern-Formmasse hergestellt werden. Diese Lösung ist insbesondere dann geeignet, wenn der Stützkern ein Formkörper mit einem über seine gesamte Länge uniformen Querschnitt ist.

Die Grösse eines erfindungsgemäss hergestellten Stützkerns kann beliebig sein und z.B. von wenigen Zentimetern bis zu einigen Metern reichen. Ebenso sind der Formgebung des Stützkerns keine Grenzen gesetzt. Dieser kann voluminös, flächig, dünn oder dick ausgebildet sein und Hinterschneidungen und andersweitige, komplexe geometrische Formen aufweisen.

Der Stützkern besteht vorzugsweise teilweise und insbesondere vollständig oder im Wesentlichen aus einem Wachs. Der Wachs ist z.B. ein natürlicher Wachs, wie pflanzlicher Wachs, tierischer Wachs, Mineralwachs, petrochemischer Wachs, oder ein chemisch modifizierter Wachs, wie Hartwachs und insbesondere ein synthetischer Wachs, wie Polyalkylenwachs oder Polyethylenglykolwachs. Der Stützkern kann auch aus einer Mischung verschiedener Wachse sein.

Der Stützkern kann neben Wachs noch Füllstoffe, wie z.B. Mineralstoffe, enthalten. Der Füllstoff kann beispielsweise zur Herabsetzung des Schwundmasses oder zur Beeinflussung der Schmelztemperatur oder der Plastizität eingesetzt werden. Vorliegendes Verfahren erlaubt jedoch insbesondere den Einsatz von praktisch reinen Wachsen, welche zwar ein hohes Mass an Schwund bei ihrer Erstarrung aufweisen, sich erfahrungsgemäss aber besonders gut ausschmelzen lassen. D.h. reine Wachse lassen sich alleine durch den Ausschmelzprozess, also ohne mechanische Eingriffe, praktisch vollständig aus dem Hohlraum des Faserverbundbauteils entfernen.

Der Stützkern wird vorzugsweise nach seiner plastischen Umformung auf seiner Umformtemperatur gehalten und mit dieser Temperatur zwecks Herstellung des Faserverbundbauteils in das Formwerkzeug gebracht. Der Stützkern wird vorzugsweise unmittelbar nach der plastischen Umformung zur Herstellung des Faserverbundbauteils eingesetzt, so dass dieser seine Umformtemperatur bis zum Einlegen in das Formwerkzeug und Injizieren der Kunststoffmatrix im Wesentlichen beibehält.

Der Stützkern kann ferner nach der plastischen Umformung auch abgekühlt werden, beispielsweise auf eine Raumtemperatur, d.h. auf eine Temperatur von 15 - 25°C, und zur Herstellung des Faserverbundbauteils z.B. wieder auf seine ursprüngliche Umformtemperatur erwärmt werden.

Die Herstellung des Faserverbundbauteils erfolgt zweckmässig mittels eines mehrteiligen und vorzugsweise zweiteiligen Formwerkzeuges. Das Formwerkzeug bildet zweckmässig eine der Aussenkontur des herzustellenden Faserverbundbauteils entsprechende Formwerkzeugkavität aus. Das Formwerkzeug, insbesondere die formgebende Schale des Formwerkzeuges, kann aus einem Metall oder Metalllegierung wie Aluminium, Stahl, Chrom, Chromstahl, Nickel, sowie aus Teflon@ oder Nickel-Teflon® sein. Das Formwerkzeug kann ferner aus Kunststoff bzw. verstärktem Kunststoff oder einem keramischen Werkstoff bestehen. Das Formwerkzeug bzw. die Wandung der Formwerkzeugkavität ist vorzugsweise beheizbar.

Zu Beginn des Verfahrens wird die Formwerkzeugkavität des geöffneten Formwerkzeuges mit den Verstärkungsfasern, dem Stützkern und gegebenenfalls weiteren Komponenten beschickt.

Die Verstärkungsfasern können beispielsweise anorganische Fasern, wie Glasfasern, Kohlenstoff- oder Graphitfasern, wie z.B. HT (High Tenacity)-Fasern, HM (High Modulus)-Fasem, HST (High Strain and Tenacity)-Fasern oder IM (Intermediate Modulus)-Fasern, Metallfasern (Draht), keramische Fasern oder Fasern aus Cellulosederivaten oder aus thermoplastischen Kunststoffen, wie z.B. Polyvinylchloride, Polyacrylonitrile, Polyacryle, Polyolefine, z.B. Polypropylen, Polyester, Polyamide oder Kunststofffasern, bekannt unter Kevlar® bzw. Aramid, etc., oder Naturfasern, wie faserartige Silikatminerale, Jute, Sisal, Hanf, Baumwolle, Ramiefasern, etc., oder Mischfasern davon sein. Besonders bevorzugt sind Glasfasern.

Die Verstärkungsfasern liegen zweckmässig als Fasergebilde z.B. in Form von textilen Flächengebilden wie Vliese, nichtmaschenbildenden Systemen, wie Gewebe, uni- oder bidirektionale Gelege, Geflechte usw. oder maschenbildenden Systemen, wie Gestricke oder Gewirke vor. Bevorzugt werden hauptsächlich textile Flächengebilde aus gerichteten Fasern und insbesondere textile Gewebe zweckmässig aus Langfasem mit Faserlängen von vorzugsweise länger als 150 mm und insbesondere länger als 200 mm, wobei die Fasern bzw. Rovings zu Faserbündeln bzw. Faserstränge von z.B. 0,1 - 5 mm Durchmesser zusammengefasst und die Faserbündel gegenseitig verwoben sind. Die Fasergebilde liegen bevorzugt als trockene Fasergebilde vor.

Da die eingesetzten textilen Flächengebilde bevorzugt sehr dicht und fest sind, d.h. ohne Verletzung der Faserstruktur nur schwer verformbar sind, werden diese zweckmässig zu sogenannten Faserrohlingen oder Preforms z.B. in Form von Hohlkörpern oder Schalenteilen aufbereitet. Dies kann z.B. mit Hilfe einer automatischen Vorformanlage geschehen, in welcher die Faserrohlinge passgenau in gewünschter, dem Faserverbundbauteil angepasster Form hergestellt werden.

Die Faserrohlinge können beispielsweise in einem thermischen Tief- oder Streckziehprozess hergestellt werden, wobei die Flächengebilde mit einem Binder versehen sein können, welcher sich nach Abkühlen des Faserrohlings verfestigt und diesen in der gegebenen Form hält. Die Fasern werden bei der Umformung zu Faserrohlingen mittels Fasergleiteffekt und gegebenenfalls durch Dehnung in die gewünschte Form gebracht. Die Faserrohlinge können jedoch auch in einem Webverfahren angefertigt werden, welches erlaubt, dreidimensionale Fasergebilde herzustellen.

Die automatisierte Herstellung von Faserrohlingen in Vorformanlagen gewährleistet niedrige Masstoleranzen sowie eine hohe Reproduzierbarkeit und einen hohen Automatisierungsgrad.

Die Faserrohlinge können als halbschalenförmige Teile hergestellt werden, wobei in dieser Ausführung in einem der ersten Verfahrensschritte zur Herstellung des Faserverbundbauteils eine erste Faserrohling-Halbschale in die Kavität eingelegt wird, gefolgt vom Stützkem, welcher in die Faserrohling-Halbschale eingebettet und mit einer weiteren korrespondierenden Faserrohling-Halbschale überdeckt wird. Der Faserrohling kann auch in Form eines den Stützkern aufnehmenden Hohlkörpers ausgebildet sein. Der Stützkern wird vorzugsweise vollständig von Fasergebilden bzw. Faserrohlingen umhüllt.

Die Faserrohlinge bzw. Fasergebilde können vor dem Einlegen in das Formwerkzeug, zwecks Verbesserung der Durchtränkung mit der Kunststoffmatrix während des Injiziervorganges, vorbenetzt werden.

Neben den genannten Faserrohlingen bzw. Fasergebilden können weitere Verstärkungsfasern, z.B. als textile Flächengebilde, in Form von Schichten oder Lagen, im Faserverbundbauteil vorgesehen sein. Ferner kann der Faserrohling bzw. das Fasergebilde an seiner nach aussen weisenden Oberfläche im Faserverbundbauteil mit einem Deckvlies überzogen sein, wodurch eine schönere Ausbildung der Oberfläche des Faserverbundbauteils erzielt wird.

Ferner können die erfindungsgemäss hergestellten Faserverbundbauteile mit geschlossenem oder hinterschnittenem Hohlraum zwecks lokaler Erhöhung der Steifigkeit, Verwindungsund Durchbiegefestigkeit abschnittsweise in Sandwichbauweise mit Verstärkungskernen, insbesondere mit Schaumstoffkernen aus Kunststoff, gefertigt sein. Das Formwerkzeug kann z.B. neben Stützkernen abschnittsweise mit Verstärkungskernen beschickt werden. Bevorzugte Verstärkungskerne sind Schaumstoffkerne, welche aus Polyurethan (PUR), Polyvinylchlorid (PVC) oder aus einem Polyolefin sein können. Die Verstärkungskerne können vollständig aufgeschäumt in die Formwerkzeugkavität eingelegt werden. Ferner können Verstärkungskerne in die Formwerkzeugkavität eingelegt werden, welche während der Herstellung des Faserverbundbauteils in ihre endgültige Form aufschäumen. Der Schaumstoffkern ist zweckmässig flüssigkeitsundurchlässig. Es können teilweise oder vollständig offenzellige und vorzugsweise geschlossenzellige Schaumstoffkerne verwendet werden, wobei diese an ihrer Oberfläche beispielsweise flüssigkeitsdicht versiegelt bzw. abgedichtet sind. Die Verstärkungskerne aus Schaumstoff weisen beispielsweise eine Dichte von 30 - 110 kg/m³, vorzugsweise von 60 - 80 kg/m³ auf. Das Einbringen solcher Verstärkungskerne in die Formwerkzeugkavität geschieht nach demselben Vorgehen wie beim Stützkern.

Im weiteren können auch Einlegeteile bzw. Inserts, z.B. aus Metall, wie Stahl oder Aluminium, oder aus Kunststoff, in das Formwerkzeug miteingelegt werden.

Nach dem Beschicken des Formwerkzeugs mit den oben genannten Komponenten wird dieses geschlossen. In die Formwerkzeugkavität des geschlossenen Formwerkzeuges wird anschliessend eine Kunststoffmatrix injiziert. Die Kunststoffmatrix ist z.B. aus einem thermoplastischen und vorzugsweise duroplastischen Kunststoff. Die injizierte Kunststoffmatrix ist insbesondere ein Harzsystem aus der Reihe der Polymerisationsharze, wie ungesättige Polyestherharze (UP) oder Methacrylate und insbesondere Vinylestherharze (VE), oder der Polyadditions- bzw. Polykondensationsharze, wie Epoxidharze, Phenolharze oder Polyimide. Besonders bevorzugt werden Epoxidharzsysteme mit äusserst geringem Schwund. D.h. das Harzsystem weist insbesondere beim Aushärten keine oder nur geringe Volumenänderungen auf. Der Reaktionsschwund des Harzsystems beträgt vorzugsweise weniger als 3%.

Die Kunststoffmatrix, bzw. das Epoxidharz, ist vorzugsweise niedrig-viskos und leicht injizierbar und weist bevorzugt eine Viskosität von 100 - 500 mPa und insbesondere von 200 - 300 mPa auf.

Der Harzdurchfluss geschieht zweckmässig in Querstromfahrweise, wobei die Zufuhr der Kunststoffmatrix in die Formwerkzeugkavität über eine oder mehrere Injektionsdüsen erfolgen kann. Die Injektionsdrücke liegen beispielsweise zwischen 1 und 20 bar, vorzugsweise zwischen 3 und 15 bar.

In weitere Ausführung des erfindungsgemässen Verfahrens kann während des Injiziervorganges ein Unterdruck an die Formwerkzeugkavität angelegt wird, um den Harzfluss zu verbessern und die Gase beschleunigt aus der Formwerkzeugkavität zu entfernen.

Die Kunststoffmatrix wird vorzugsweise mit einer Temperatur von wenigstens 30°C, vorzugsweise von wenigstens 40°C und insbesondere von wenigstens 55°C, und von höchstens 80°C, vorzugsweise von höchstens 75°C und insbesondere von höchstens 65°C in die Formwerkzeugkavität injiziert.

Das Formwerkzeug bzw. die Wandung der Formwerkzeugkavität wird während des Injiziervorganges vorzugsweise auf eine Temperatur von wenigstens 30°C, vorzugsweise von wenigstens 40°C und insbesondere von wenigstens 50°C, und von höchstens 80°C, vorzugsweise von höchstens 70°C und insbesondere von höchstens 60°C beheizt.

Die mittlere Temperatur des Stützkerns während der plastischen Umformung, die sogenannte Umformtemperatur, und die mittlere Temperatur des Stützkerns während des Injizierens der Kunststoffmatrix bei der Herstellung des Faserverbundbauteils, die sogenannte Verfahrenstemperatur, sind vorzugsweise gleich oder weichen nur geringfügig voneinander ab. Dadurch wird gewährleistet, dass der Stützkern im Formwerkzeug im Wesentlichen dem Formzustand unmittelbar nach seiner plastischen Umformung entspricht und keine thermisch bedingte Volumenänderung erfährt.

Die Verfahrenstemperatur des Stützkern wird durch die Vortemperatur des Stützkerns beim Einlegen in das Formwerkzeug, die Temperatur des injizierten Harzes und durch das beheizte Formwerkzeug bestimmt. Die Verfahrenstemperatur des Stützkerns weicht beispielsweise weniger als ±6°C, vorzugsweise weniger als ±4°C und insbesondere weniger als ±2°C von der Umformtemperatur des Stützkerns ab.

In weiterer Ausführung der Erfindung liegt die Verfahrenstemperatur des Stützkerns höher als seine Umformtemperatur, beispielsweise mehr als 0°C, vorzugsweise mehr als 1°C und insbesondere mehr als 2°C, und weniger als 10°C, vorzugsweise weniger als 6°C, insbesondere weniger als 4°C und vorteilhaft weniger als 3°C. In bevorzugter Ausführung wird der Stützkern, insbesondere durch die freigesetzte Reaktionswärme der aushärtenden Kunststoffmatrix, während des Formgebungsprozesses erwärmt. Durch die Erwärmung expandiert der Stützkern in der Formwerkzeugkavität und übt einen von innen nach aussen quer zu den Faserlagen gerichteten Druck auf die Verstärkungsfasem und die Kunsttoffmatrix aus, d.h. auf die Faserverbund-Formmasse aus, wodurch die Kunststoffmatrix in die Fasergebilde gedrückt wird und die Fasergebilde vollständig mit der Kunststoffmatrix durchtränkt werden. Die thermisch bedingte Volumendehnung des Stützkerns quer zu den Fasergebilden beträgt beispielsweise mehr als 0 %, vorzugsweise mehr als 1% und insbesondere mehr als 2% und beispielsweise weniger als 10%, vorzugsweise weniger als 5%, insbesondere weniger als 3% seiner ursprünglichen Abmessungen.

Dank diesem Effekt können beispielsweise Faserverbundbauteile mit einem Faservolumenanteil von z.B. über 40% hergestellt werden, wobei die Faserverbundbauteile hochqualitative Oberflächen erhalten.

Die Faserverbundbauteile weisen zweckmässig einen Faservolumengehalt von über 20%, vorzugsweise von über 30% und insbesondere von über 40% und von zweckmässig weniger als 80%, vorzugsweise von weniger als 70%, insbesondere von weniger als 60% auf.

Das Faserverbundbauteil wird nach Abschluss des Injiziervorgangs vorzugsweise bei einer Reaktionstemperatur von rund 65 - 85°C, insbesondere von 75 - 80°C im Formwerkzeug ausgehärtet und nach Erreichen der Formstabilität entformt.

Die Formbelegungszeit, d.h. die Verweilzeit vom Beschicken bis zum Entformen des Faserverbundbauteils, liegt beispielsweise unter 20 Minuten, vorzugsweise unter 10 bis 15 Minuten.

Das entformte Faserverbundbauteil wird sodann dem sogenannten Tempern unterzogen, wobei das Faserverbundbauteil dazu zweckmässig in eine Temper-Form überführt wird. Beim Tempern wird das Faserverbundbauteil während einer Zeitdauer von beispielsweise meheren Stunden bei Temperaturen von vorzugsweise 80 - 120°C, insbesondere von 90 - 110°C, vorteilhaft von 95 - 105°C wärmebehandelt. Während dem Tempern erhält das Formteil seine dauerhaften mechanischen und optischen Eigenschaften.

Die Temper-Form bzw. die die Formkavität ausbildende Schale der Temper-Form besteht z.B. aus einem Metall oder einer Metalllegierung, wie Aluminium oder Stahl, einem keramischen Werkstoff und vorzugsweise aus Kunststoff bzw. verstärktem Kunststoff. Die Temper-Form kann beispielsweise eine Pressformwerkzeughälfte sein.

Das Tempern wird zweckmässig in einem dazu geeigneten Temper-Ofen ausgeführt, in welchem das Faserverbundbauteil z.B. mittels Wärmestrahlung, Heissluft bzw. Konvektionswärme auf die Temper-Temperatur erwärmt wird.

Der Stützkern wird zweckmässig während des Temperns und insbesondere spätestens bei Erreichen der maximalen Temper-Temperatur aus dem Faserverbundbauteil ausgeschmolzen, wobei der Stützkern bei Abschluss des Temperns vorzugsweise vollständig aus dem Faserverbundbauteil ausgeschmolzen ist. Die Temper-Temperatur und insbesondere die maximale Temper-Temperatur, entspricht somit zweckmässig der Schmelztemperatur des Stützkerns oder liegt darüber.

Das Faserverbundbauteil enthält zweckmässig eine oder mehrere in geeigneter Lage positionierte Ausschmelzöffnungen, insbesondere in Form von Lochöffnungen oder Schlitzöffnungen, zum Ausschmelzen des Stützkerns. Die Ausschmelzöffnungen können bereits während der Herstellung des Faserverbundbauteils vorgesehen sein oder nachträglich nach der Entformung, z.B. als Bohrungen, am Faserverbundbauteil ausgeführt werden. Der maximale Durchmesser der Ausschmelzöffnungen beträgt beispielsweise 1 - 50 mm, insbesondere 1 bis 10 mm. Die Ausschmelzöffnungen sind bevorzugterweise möglichst unauffällig, d.h. möglichst nicht an repräsentativen Sichtflächen, angeordnet.

Der ausgeschmolzene Stützkern wird zweckmässig zur Herstellung eines neuen Stützkerns verwendet. Das Ausschmelzen des Stützkerns erfolgt in bevorzugter Ausführung der Erfindung direkt in eine Giessform zur Herstellung eines neuen, vorstehend beschriebenen Vorformlings. Die Ausschmelzöffnung und die Eingussöffnung können z.B. über eine Rohroder Schlauchleitung gegenseitig verbunden sein. Die Schmelze des Stützkern kann z.B. über eine an der Ausschmelzöffnung angebrachte Rohr- bzw. Schlauchleitung in die Giessform ausfliessen, wobei die Rohr- oder Schlauchleitung z.B. in eine Eingussöffnung der Giessform mündet. Durch das Abfliessen der Schmelze über eine Rohr- oder Schlauchleitung in die Giessform erhält man ein geschlossenes System, wodurch eine übermässige Ausbreitung von Dämpfen aus der Schmelze und somit Materialablagerungen im Ofen durch kondensierende Dämpfe verhindert oder reduziert werden können.

Der während dem Ausschmelzprozess unmittelbar aus dem ausschmelzenden Stützkern gegossene Vorformling wird wiederum zu einem Stützkern plastisch umgeformt. In bevorzugter Ausführung des Verfahrens wird eine Lagerhaltung mit mehreren Vorformlingen betrieben, wobei zur Herstellung der Stützkerne kontinuierlich Vorformlinge aus dem Lagerbestand entnommen werden. Der Lagerbestand wird wiederum kontinuierlich mit Vorformlingen aus ausgeschmolzenen Stützkernen bestückt, so dass ein ausgeglichener Bestand von Vorformlingen vorhanden ist, welcher erlaubt kurzfristig die Produktion an Faserverbundbauteilen zu erhöhen. Die Umformung der Vorformlinge zu Stützkernen richtet sich vorzugsweise nach den aktuellen Produktionszahlen an Faserverbundbauteilen. Die Stützkerne werden vorzugsweise unmittelbar nach dem Umformvorgang dem Produktionsprozess von Faserverbundbauteilen zugeführt.

Das erfindungsgemässe Verfahren eignet sich beispielsweise zur Herstellung von Faserverbundbauteilen für Strassen- und Schienenfahrzeuge sowie für Sportgeräte und von Faserverbundbauteilen zum Einsatz in der Luft- und Raumfahrt, sowie in der Bautechnik. Die Faserverbundbauteile können beispielsweise Spaceframe-Teile, Luftleitelemente bzw. Spoiler (Heck-, Front- oder Dachspoiler), Türelemente, wie Türrahmen, oder Flüssigkeitstanks von Strassen- oder Schienenfahrzeugen, insbesondere von PKW's sein. Die Faserverbundbauteile können ferner in oben genannten Anwendungsbereichen verwendete Strukurteile sein.

Die Erfindung betrifft ferner einteilige Faserverbundbauteile, hergestellt nach dem erfindungsgemässen Verfahren. Die Faserverbundbauteile zeichnen sich dadurch aus, dass sie einen Faservolumengehalt von über 30% aufweisen und wenigstens einen geschlossenen oder hinterschnittenen Hohlraum enthalten und die Bandbreite der Form- und Masstoleranzen, insbesondere der Wanddicken, weniger als 5% bezogen auf einen Nennmasswert beträgt.

Die Wanddicken eines nach dem erfindungsgemässen Verfahren hergestellten Faserverbundbauteils können z.B. mehr als 1 mm, vorzugsweise mehr als 2 mm, insbesondere mehr als 3 mm und z.B. weniger als 30 mm, vorzugsweise weniger als 10 mm und insbesondere weniger als 6 mm betragen.

Die nach dem erfindungsgemässen Verfahren hergestellte Faserverbundbauteile zeichnen sich durch eine hohe Steifigkeit und strukturelle Festigkeit in Kombination mit geringem Gewicht sowie dank der Verwendung von plastisch umgeformten Stützkernen durch sehr kleine Mass- und Form-Toleranzen und durch eine ausgezeichnete Reproduzierbarkeit aus. Die Bandbreite der Form- und Masstoleranzen, insbesondere der Wanddicke, betragen beispielsweise insgesamt weniger als 10%, vorzugsweise weniger als 5% und insbesondere weniger als 2% bezogen auf einen Nennmasswert. Ferner können die sichtbaren Flächen der genannten Faserverbundbauteile einen "Class A" Oberflächenfinish aufweisen. Die Hohlraumbauweise erlaubt im weiteren die Integration von Lüftungskanälen, Leitungen, z.B. für Strom oder Fluide, wie Flüssigkeiten oder Gase, sowie von Speichern für Fluide.

Die kombinierte Bauweise von Sandwich- und Hohlraumbauweise erlaubt es, das Bauteil an gezielten Stellen und Bereichen zu verstärken und zu versteifen ohne das Gesamtgewicht unnötig zu erhöhen. Zudem können erfindungsgemässe Faserverbundbauteile mit einer hohen Geometriekomplexität und Funktionsintegration hergestellt werden.

Mit dem erfindungsgemässen Verfahren zur Herstellung von Stützkernen erhält man Stützkerne, die frei von Einfallstellen und Lunker sind. Ferner weisen die erfindungsgemäss hergestellten Stützkerne eine ausgezeichnete Masshaltigkeit mit abschätzbarem Schwundverhalten auf.

Im folgenden wird die Erfindung beispielhaft und mit Bezug auf die beiliegenden Zeichnungen näher erläutert. Es zeigen:

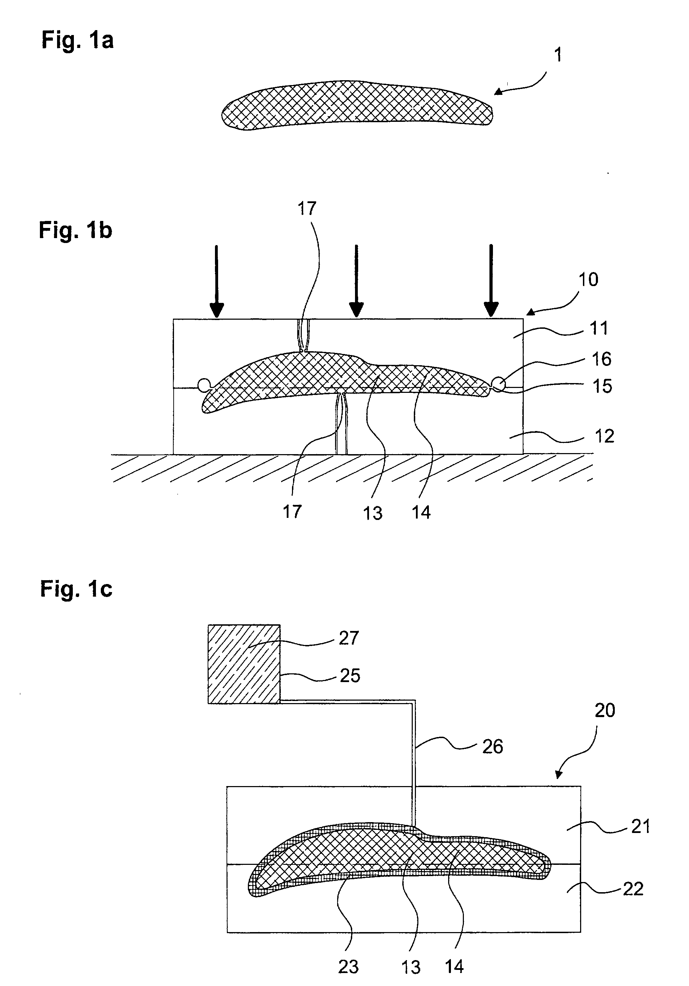

- Fig. 1a:: eine schematische Querschnittsansicht eines Vorformlings aus Wachs;
- Fig. 1b:: eine schematische Querschnittsansicht eines Pressformwerkzeuges mit Stützkern;
- Fig. 1c:: eine schematische Querschnittsansicht eines mit dem Stützkern und Verstärkungsfasern beschickten RTM-Formwerkzeuges;

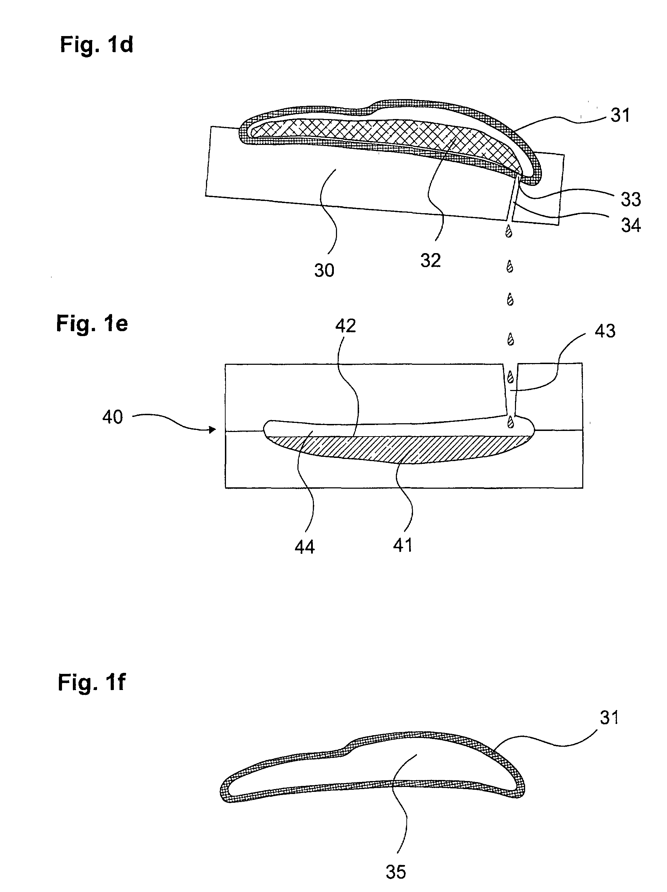

- Fig. 1d:: eine schematische Querschnittsansicht eines Faserverbundbauteils in der Temper-Form;
- Fig. 1e:: eine schematische Querschnittsansicht einer Giessform;
- Fig. 1f:: eine schematische Querschnittsansicht eines Faserverbundbauteils.

Ein in der Rohform eines herzustellenden Stützkerns 13 gegossener Vorformling 1 (Fig. 1a), bestehend aus einem reinen Wachs mit einer Schmelztemperatur von rund 90°C, wird auf eine mittlere Temperatur von rund 55°C erwärmt und in die Kavität einer unteren Pressformwerkzeughälfte 12 eines Pressformwerkzeuges 10 gelegt (Fig. 1b). Das Pressformwerkzeug 10, insbesondere die Oberfläche der Pressformwerkzeugkavität 14 besteht aus einem wärmefesten Kunststoff. Das Pressformwerkzeug 10, insbesondere die Oberfläche der Pressformwerkzeugkavität 14 ist auf eine Temperatur von rund 60°C erwärmt bzw. beheizt, so dass sich der Vorformling 1 während des Umformvorganges nicht oder nur unwesentlich abkühlt. Der Kunststoff des Pressformwerkzeuges 10 isoliert zusätzlich den Vorformling 1 vor übermässiger Abkühlung.

Durch Aufsetzen und dosiertes Aufpressen einer oberen Pressformwerkzeughälfte 11 auf die untere Pressformwerkzeughälfte 12 wird der Vorformling 1 in die Kontur der Pressformwerkzeugkavität 14 verpresst bzw. plastisch umgeformt. Die Umformung zum endgeformten Stützkern 13 erfolgt durch Materialfluss aus den Bereichen mit einem Materialüberschuss in die Bereiche mit einem Materialdefizit. Im Pressformwerkzeug 10 sind an geeigneter Stelle Entlüftungsöffnungen 17 enthalten, welche die Abführung von eingeschlossenen Lufttaschen ermöglichen. Das Pressformwerkzeug 10 enthält ferner Verdrängungsöffnungen 15, durch welche überschüssiges Material des Vorformlings 1 während der plastischen Umformung in einen ringförmig um die Pressformwerkzeugkavität 14 verlaufenden Verdrängungskanal 16 aus der Pressformwerkzeugkavität 14 ausfliessen kann. Mit dem vollständigen Schliessen des Pressformwerkzeuges 10 ist der Pressvorgang bzw. die Umformung abgeschlossen.

Das Pressformwerkzeug 10 wird nach Abschluss der plastischen Umformung durch entfernen der oberen Pressformwerkzeughälfte 11 geöffnet und der endgeformte Stützkern 13 kann aus der Pressformwerkzeugkavität 14 entnommen werden.

Der Stützkern 13 wird auf einer Temperatur von rund 55°C gehalten und unmittelbar nach seiner Umformung im nachfolgenden RTM-Verfahren zur Herstellung des Faserverbundbauteils eingesetzt.

Das Faserverbundbauteil wird in einem RTM-Verfahren hergestellt. Dazu wird ein zweiteiliges, geöffnetes RTM-Formwerkzeug 20 mit Faserrohlingen und dem erfindungsgemäss hergestellten Stützkem 13 beschickt, wobei der Stützkem 13 von den Faserrohlingen umhüllt wird (Fig. 1c). Nach Schliessen des RTM-Formwerkzeuges 20, d.h. nach Zusammenführen der oberen und unteren RTM-Formwerkzeughälften 21, 22 wird über eine Harzzuleitung 26 aus einem Harzbehälter 25 eine Epoxidharzmatrix 27 in die RTM-Formwerkzeugkavität 24 injiziert.

Die Epoxidharzmatrix 27 wird mit einer Temperatur von rund 60°C in die RTM-Formwerkzeugkavität 24 des auf rund 60°C geheizten RTM-Werkzeuges 20 injiziert, wobei die Epoxidharzmatrix die Faserrohlinge durchtränkt, so dass sich eine Faserverbund-Formmasse 23 ausbildet, welche den Stützkern 13 schalenförmig umhüllt.

Die Faserverbund-Formmasse 23 wird nach Beenden des Injiziervorganges bei einer Reaktionstemperatur von 65 - 85°C ausgehärtet. Anschliessend wird das bereits formstabile Faserverbundbauteil 31 aus dem RTM-Formwerkzeug 20 entnommen und zum sogenannten Tempern in eine Temper-Form 30 überführt (Fig. 1d). Das Tempern des Faserverbundbauteil 31 findet bei rund 100 - 110°C in einem geeigneten Temper-Ofen statt (nicht gezeigt).

Während des Temper-Vorganges wird der Stützkern im Innern des Faserverbundbauteils 31 abgeschmolzen, wobei die Schmelze über eine Ausschmelzöffnung 33 im Faserverbundbauteil 31 und über einen Ausschmelzkanal 34 in der Temperform 30 ausfliesst. Die ausfliessende Schmelze wird unmittelbar in eine Giessform 40 zur Herstellung eines neuen Vorformlings 1 geleitet (Fig. 1e). Die Giessform 40 bildet einen geschlossene Giessformkavität 44 aus, wobei die Schmelze 41 über eine Eingussöffnung 43 in die Giessformkavität 44 geleitet wird.

In Abweichung von vorliegender Ausführung kann die Giessform 40 auch eine offene Giessformkavität aufweisen, so dass der auf diese Weise hergestellte Vorformling auf einer Seite eine plane Fläche aufweist, welche dem ursprünglichen Giessspiegel 42 entspricht.

Nach Abschluss des Temperns ist der Stützkern vollständig ausgeschmolzen und es liegt ein vollständig ausgehärtetes Faserverbundbauteil 31 mit einem Hohlraum 35 vor (Fig. 1f).

Der aus dem ausgeschmolzenen Stützkern 13 gegossene Vorformling 1 wird erneut zu einem Stützkern 13 plastisch umgeformt.

## Patentansprüche

1. Verfahren zur Herstellung von einteiligen Faserverbundbauteilen (31) mit wenigstens einem geschlossenen oder hinterschnittenen Hohlraum (35), insbesondere ein Harz-Fliessform- oder RTM-Verfahren, wobei ein formstabiler, die Hohlraum-Form (35) des Faserverbundbauteils (31) wiedergebender Stützkern (13) hergestellt wird und ein Formwerkzeug (20) mit einer Formwerkzeugkavität (24) wenigstens mit einem Fasergebilde und dem Stützkern (13) beschickt wird und in die Formwerkzeugkavität (24) des geschlossenen Formwerkzeuges (20) unter Ausbildung einer Faserverbund-Formmasse (23) eine fliessfähige, das Fasergebilde durchtränkende Kunststoffmatrix (27) injiziert wird und die Faserverbund-Formmasse (23) zu einem Faserverbundbauteil (31) ausgehärtet wird, wobei der Stützkern (13) ein über der Raumtemperatur ausschmelzbarer Formkörper ist, welcher bei der Herstellung des Faserverbundbauteils (31) nach Erreichen der Formstabilität des Faserverbundbauteils (31) unter Ausbildung eines geschlossenen oder hinterschnittenen Hohlraumes (35) aus dem Faserverbundbauteil (31) ausgeschmolzen wird,
**dadurch gekennzeichnet, dass**
der Stützkern (13) mittels plastischer Umformung aus einer an sich Formstabilen Stützkem-Formmasse oder einem Vorformling (1) hergestellt wird.

2. Verfahren nach Anspruch 1, **dadurch gekennzeichnet, dass** der Stützkern (13) aus einem Vorformling (1) plastisch geformt wird und der Vorformling (1) vorzugsweise gegossen wird, insbesondere in eine Roh- oder Grobform der Endform des Stützkerns (13) gegossen wird, und die Form des Vorformlings (1) vorzugsweise solcherweise gewählt ist, dass die Fliesswege des Materials während der plastischen Umformung möglichst gering sind und der Vorformling (1) eine gleiche und vorzugsweise eine grössere Masse aufweist als der herzustellende Stützkern (13).

3. Verfahren nach einem der Ansprüche 1 bis 2, **dadurch gekennzeichnet, dass** die Stützkern-Formmasse oder der Vorformling (1) bei einer mittleren Temperatur von grösser als 20°C, vorzugsweise von grösser als 35°C, insbesondere von grösser als 50°C und von kleiner als die Schmelztemperatur plastisch umgeformt wird, wobei die Schmelztemperatur über 50°C liegt.

4. Verfahren nach einem der Ansprüche 1 bis 3, **dadurch gekennzeichnet, dass** der Stützkern (13) Wachs, vorzugsweise natürlichen, chemisch modifizierten oder synthetischen Wachs, enthält und vorzugsweise im Wesentlichen oder vollständig daraus besteht.

5. Verfahren nach einem der Ansprüche 1 bis 4, **dadurch gekennzeichnet, dass** die Stützkern-Formmasse oder der Vorformling (1) eine Schmelztemperatur von wenigstens 75°C, vorzugsweise von wenigstens 85°C und insbesondere von wenigstens 90°C und von höchstens 130°C, vorzugsweise von höchstens 120°C und insbesondere von höchstens 110°C aufweist und die Stützkern-Formmasse oder der Vorformling (1) ab einer Temperatur von wenigstens 20°C, vorzugsweise von wenigstens 30°C, insbesondere von wenigstens 50°C bis zum Erreichen des Schmelzpunktes plastisch umformbar ist.

6. Verfahren nach einem der Ansprüche 1 bis 5, **dadurch gekennzeichnet, dass** der Stützkern (13) mittels Fliesspressen hergestellt und in einem eine Pressformwerkzeugkavität (14) ausbildenden Pressformwerkzeug, vorzugsweise in einem mehrteiligen, insbesondere in einem zweiteiligen Pressformwerkzeug (10), umgeformt wird, wobei die Stützkem-Formmasse oder der Vorformling (1) in die geöffnete Pressformwerkzeugkavität (14) eingelegt und durch Zusammenführen der Pressformwerkzeugteile (11, 12) und Schliessen des Pressformwerkzeuges (10) in die Kontur der Pressformwerkzeugkavität (14) verpresst und zu einem Stützkern (13) endgeformt wird.

7. Verfahren nach einem der Ansprüche 1 bis 6, **dadurch gekennzeichnet, dass** der Vorformling (1) in ein zweiteiliges, eine Pressformwerkzeugkavität (14) ausbildendes, geöffnetes Pressformwerkzeug (10) eingelegt wird, wobei die Pressformwerkzeugteile Teilkavitäten ausbilden und die Pressformwerkzeugkavität (14) die Hohlraum-Form im vorgesehen Faserverbundbauteil (31) wiedergibt, und durch Schliessen des Pressformwerkzeuges (10) die Stützkern-Formmasse oder der Vorformling (1) mittels Fliesspressen in die Kontur der Pressformwerkzeugkavität (14) verpresst und zu einem Stützkern (13) umgeformt wird.

8. Verfahren nach einem der Ansprüche 1 bis 7, **dadurch gekennzeichnet, dass** die Stützkern-Formmasse oder der Vorformling (1) gegenüber dem endgeformten Stützkern (13) einen Materialüberhang aufweist und der Materialüberhang während des Fliesspressens durch Verdrängungsöffnungen (15) aus der Pressformwerkzeugkavität (14) hinaus fliessen kann und die Pressformwerkzeugkavität (14) Entlüftungsöffnungen (17) zum Abführen eingeschlossener Lufttaschen enthält.

9. Verfahren nach einem der Ansprüche 1 bis 8, **dadurch gekennzeichnet, dass** aus dem ausgeschmolzenen Stützkern (13) wieder ein Vorformling (1) gegossen wird und das flüssige Material des ausschmelzenden Stützkems (13) unmittelbar in eine Giessform (40) zur Herstellung eines neuen Vorformlings (1) geleitet wird.

10. Verfahren nach einem der Ansprüche 1 bis 9, **dadurch gekennzeichnet, dass** die mittlere Temperatur des Stützkerns (13) während des Injizierens der Kunststoffmatrix (27) in das Formwerkzeug (20) weniger als ±6°C, vorzugsweise weniger als ±4°C, insbesondere weniger als ±2°C von der mittleren Temperatur der Stützkern-Formmasse oder des Vorformlings (1) während der plastischen Umformung abweicht oder die mittlere Temperatur des Stützkerns (13) während des Injizierens der Kunststoffmatrix (27) in das Formwerkzeug (20) der mittleren Temperatur der Stützkern-Formmasse oder des Vorformlings (1) während der plastischen Umformung entspricht.

11. Verfahren nach einem der Ansprüche 1 bis 10, **dadurch gekennzeichnet, dass** die mittlere Temperatur des Stützkerns (13) während des Injizierens der Kunststoffmatrix in das Formwerkzeug (20) weniger als 6°C, vorzugsweise weniger als 4°C, insbesondere weniger als 3°C und mehr als 0°C, vorzugsweise mehr als 1°C, insbesondere mehr als 2°C, höher liegt als die mittlere Temperatur der Stützkem-Formmasse oder des Vorformlings (1) während seiner plastischen Umformung, und der Stützkern (13) während oder nach dem Injizieren der Kunststoffmatrix (27) erwärmt wird und eine gegen die Faserverbund-Formmasse (23) gerichtete thermische Volumendehnung von mehr als 0%, vorzugsweise mehr als 1% und von weniger als 10%, vorzugsweise weniger als 5%, insbesondere von weniger als 2% erfährt, und durch die thermische Volumendehnung ein Druck auf die Faserverbund-Formmasse (23) ausgeübt wird, welcher zu einer wirkungsvollen Durchtränkung der Fasergebilde mit der Kunststoffmatrix (27) führt.

12. Verfahren nach einem der Ansprüche 1 bis 11, **dadurch gekennzeichnet, dass** das Faserverbundbauteil (31) in einem Harz-Fliessform-Verfahren oder RTM-Verfahren hergestellt wird und die Kunststoffmatrix (27) aus einem duroplastischen Kunststoff, insbesondere aus einem schwundarmer Epoxidharzsystem ist und mit einer Temperatur von vorzugsweise rund 60°C in die RTM-Formwerkzeugkavität (24) eines mehrteiligen RTM-Werkzeuges (20) injiziert und bei einer Temperatur von vorzugsweise rund 70 - 80°C ausgehärtet wird und das entformte Faserverbundbauteil (31) bei einer Temperatur von vorzugsweise rund 90 - 110°C einem Tempern unterzogen wird und während dem Tempern der Stützkern (13) aus dem Faserverbundbauteil (31) ausgeschmolzen wird.

13. Verfahren nach einem der Ansprüche 1 bis 12, **dadurch gekennzeichnet, dass** die Fasergebilde vorgeformte Faserrohlinge aus textilen Flächengebilden sind.

14. Verfahren nach einem der Ansprüche 1 bis 13, **dadurch gekennzeichnet, dass** die Fasergebilde im Wesentlichen aus Glasfasern bestehen.

15. Verfahren zur Herstellung eines Stützkerns (13) zur Verwendung in einem Verfahren, insbesondere in einem Harz-Fliessform- oder RTM-Verfahren, zur Herstellung von Faserverbundbauteilen,
**dadurch gekennzeichnet, dass**
der Stützkem (13) ein über der Raumtemperatur ausschmelzbarer Formkörper ist und mittels plastischer Umformung aus einer Stützkern-Formmasse oder einem Vorformling (1) hergestellt wird.

16. Verfahren nach Anspruch 15, **dadurch gekennzeichnet, dass** der Stützkern (13) aus einem Vorformling (1) plastisch geformt wird und der Vorformling (1) vorzugsweise gegossen wird, insbesondere in eine Roh- oder Grobform der Endform des Stützkerns (13) gegossen wird, und die Form des Vorformlings (1) vorzugsweise solcherweise gewählt ist, dass die Fliesswege des Materials während der plastischen Umformung möglichst gering sind und der Vorformling (1) eine gleiche und vorzugsweise eine grössere Masse aufweist als der herzustellende Stützkern (13).

17. Verfahren nach einem der Ansprüche 15 bis 16, **dadurch gekennzeichnet, dass** die Stützkern-Formmasse oder der Vorformling (1) bei einer mittleren Temperatur von grösser als 20°C, vorzugsweise von grösser als 35°C, insbesondere von grösser als 50°C und von kleiner als die Schmelztemperatur, plastisch umgeformt wird, wobei die Schmelztemperatur über 50°C liegt.

18. Verfahren nach einem der Ansprüche 15 bis 17, **dadurch gekennzeichnet, dass** der Stützkern (13) Wachs, vorzugsweise natürlichen, chemisch modifizierten oder synthetischen Wachs, enthält und vorzugsweise im Wesentlichen oder vollständig daraus besteht.

19. Verfahren nach einem der Ansprüche 15 bis 18, **dadurch gekennzeichnet, dass** die Stützkern-Formmasse oder der Vorformling (1) eine Schmelztemperatur von wenigstens 75°C, vorzugweise von wenigstens 85°C und insbesondere von wenigstens 90°C und von höchstens 130°C, vorzugsweise von höchstens 120°C und insbesondere von höchstens 110°C aufweist und die Stützkern-Formmasse oder der Vorformling (1) ab einer Temperatur von wenigstens 20°C, vorzugsweise von wenigstens 30°C, insbesondere von wenigstens 50°C bis zum Erreichen des Schmelzpunktes plastisch umformbar ist.

20. Verfahren nach einem der Ansprüche 15 bis 19, **dadurch gekennzeichnet, dass** der Stützkern (13) mittels Fliesspressen hergestellt und in einem eine Pressformwerkzeugkavität (14) ausbildenden Pressformwerkzeug, vorzugsweise in einem mehrteiligen, insbesondere in einem zweiteiligen Pressformwerkzeug (10), umgeformt wird, wobei der Vorformling (1) in die geöffnete Pressformwerkzeugkavität (14) eingelegt und durch Zusammenführen der Pressformwerkzeugteile (11, 12) und Schliessen des Pressformwerkzeuges (10) in die Kontur der Pressformwerkzeugkavität (14) verpresst und zu einem Stützkern (13) endgeformt wird.

21. Verfahren nach einem der Ansprüche 15 bis 20, **dadurch gekennzeichnet, dass** der Vorformling (1) in ein zweiteiliges, eine Pressformwerkzeugkavität (14) ausbildendes, geöffnetes Pressformwerkzeug (10) eingelegt wird, wobei die Pressformwerkzeugteile Teilkavitäten ausbilden und die Pressformwerkzeugkavität (14) die Hohlraum-Form im vorgesehen Faserverbundbauteil (31) wiedergibt, und durch Schliessen des Pressformwerkzeuges (10) der Vorformling (1) mittels Fliesspressen in die Kontur der Pressform werkzeugkavität (14) verpresst und zu einem Stützkern (13) umgeformt wird.

22. Verfahren nach einem der Ansprüche 15 bis 21, **dadurch gekennzeichnet, dass** der Vorformling (1) gegenüber dem endgeformten Stützkern (13) einen Materialüberhang aufweist und der Materialüberhang während des Fliesspressens durch Verdrängungsöffnungen (15) aus der Pressformwerkzeugkavität (14) hinaus fliessen kann und die Pressformwerkzeugkavität (14) Entlüftungsöffnungen (17) zum Abführen eingeschlossener Lufttaschen enthält.

23. Vorrichtung zur Herstellung eines Stützkerns gemäss Anspruch 15, wobei die Vorrichtung ein zweiteiliges, in Umformposition eine geschlossene Pressformwerkzeugkavität (14) ausbildendes Pressformwerkzeug (10) ist und die Pressformwerkzeugkavität (14) die Hohlraumform des herzustellenden Faserverbundbauteils (13) wiedergibt, wobei das Pressformwerkzeug (10) in eine Verdrängungskammer (16) führende Verdrängungsöffnungen (15) zum Abführen des überschüssigen Materials des Vorformlings (1) aus der Pressformwerkzeugkavität (14) während der plastischen Umformung enthält,
**dadurch gekennzeichnet, dass**
das Pressformwerkzeug (10) zusätzlich Entlüftungsöffnungen (17) zum Entlüften eingeschlossener Lufttaschen enthält und die Verdrängungskammer ein die Pressformwerkzeugkavität geschlossen umgebender Verdrängungskanal ist, welcher an der Fügestelle zwischen zwei Pressformwerkzeughälften angeordnet ist.

24. Einteilige Faserverbundbauteile (31), hergestellt nach dem Verfahren gemäss Anspruch 1,
**dadurch gekennzeichnet, dass**
die Faserverbundbauteile (31) einen Faservolumengehalt von über 30% aufweisen und wenigstens einen geschlossenen oder hinterschnittenen Hohlraum (35) enthalten und die Bandbreite der Form- und Masstoleranzen, insbesondere der Wanddicken, weniger als 5% bezogen auf einen Nennmasswert beträgt.

## Claims

1. Method of producing one-part fibre composite components (31) with at least one closed or undercut hollow space (35), in particular resin transfer moulding or RTM, in which a dimensionally stable supporting core (13) reproducing the shape of the hollow space (35) of the fibre composite component (31) is produced, a mould (20) with a cavity (24) is charged at least with a fibrous structure and the supporting core (13), a free-flowing plastic matrix (27) impregnating the fibrous structure is injected into the cavity (24) of the closed mould (20) with the formation of a fibre composite moulding compound (23) and the fibre composite moulding compound (23) is cured to form a fibre composite component (31), wherein the supporting core (13) is a moulded part which can be melted out above room temperature and is melted out of the fibre composite component (31) during the production of the fibre composite component (31) once the dimensional stability of the fibre composite component (31) has been achieved with the formation of a closed or undercut hollow space (35), **characterised in that** the supporting core (13) is produced by means of plastic deformation from an in itself dimensionally stable supporting core moulding compound or a preform (1).

2. Method according to claim 1, **characterised in that** the supporting core (13) is plastically deformed from a preform (1), the preform (1) is preferably cast, in particular cast into roughly or approximately the final shape of the supporting core (13), and the shape of the preform (1) is preferably selected in such a manner that the flow paths of the material during the plastic defonnation are as short as possible and the preform (1) has the same and preferably a greater mass than the supporting core (13) to be produced.

3. Method according to one of claims 1 to 2, **characterised in that** the supporting core moulding compound or the preform (1) is plastically deformed at an average temperature of more than 20°C, preferably more than 35°C, in particular more than 50°C, and lower than the melting temperature, the melting temperature being higher than 50°C.

4. Method according to one of claims 1 to 3, **characterised in that** the supporting core (13) contains wax, preferably natural, chemically modified or synthetic wax, and preferably consists essentially or completely thereof.

5. Method according to one of claims 1 to 4, **characterised in that** the supporting core moulding compound or the preform (1) has a melting temperature of at least 75°C, preferably at least 85°C and in particular at least 90°C, and no more than 130°C, preferably no more than 120°C and in particular no more than 110°C, and the supporting core moulding compound or the preform (1) can be plastically deformed from a temperature of at least 20°C, preferably at least 30°C, in particular at least 50°C, until the melting point is reached.

6. Method according to one of claims 1 to 5, **characterised in that** the supporting core (13) is produced by means of flow moulding and is formed in a compression mould forming a cavity (14), preferably in a multi-part, in particular in a two-part compression mould (10), the supporting core moulding compound or the preform (1) being inserted into the open cavity (14) and pressed into the contour of the cavity (14) by bringing the compression mould parts (11, 12) together and closing the compression mould (10) so as to give the supporting core (13) its final shape.

7. Method according to one of claims 1 to 6, **characterised in that** the preform (1) is inserted into an open two-part compression mould (10) forming a cavity (14), the compression mould parts forming partial cavities, the cavity (14) reproducing the shape of the hollow space in the intended fibre composite component (31), and the supporting core moulding compound or the preform (1) being pressed into the contour of the cavity (14) by means of flow moulding by closing the compression mould (10) to form a supporting core (13).

8. Method according to one of claims 1 to 7, **characterised in that** the supporting core moulding compound or the preform (1) has excess material with respect to the supporting core (13) in its final shape, the excess material can flow out of the cavity (14) through displacement openings (15) during the flow moulding and the cavity (14) contains vent openings (17) for the removal of included air pockets.

9. Method according to one of claims 1 to 8, **characterised in that** another preform (1) is cast from the melted-out supporting core (13) and the molten material of the melting supporting core (13) is led directly into a casting mould (40) for the production of a new preform (1).

10. Method according to one of claims 1 to 9, **characterised in that** the average temperature of the supporting core (13) during the injection of the plastic matrix (27) into the mould (20) deviates by less than ± 6°C, preferably less than ± 4°C, in particular less than ± 2°C, from the average temperature of the supporting core moulding compound or of the preform (1) during the plastic deformation or the average temperature of the supporting core (13) during the injection of the plastic matrix (27) into the mould (20) corresponds to the average temperature of the supporting core moulding compound or of the preform (1) during the plastic deformation.

11. Method according to one of claims 1 to 10, **characterised in that** the average temperature of the supporting core (13) during the injection of the plastic matrix into the mould (20) is less than 6°C, preferably less than 4°C, in particular less than 3°C, and more than 0°C, preferably more than 1°C, in particular more than 2°C, higher than the average temperature of the supporting core moulding compound or of the preform (1) during its plastic deformation, the supporting core (13) is heated during or after the injection of the plastic matrix (27) and undergoes thermal volume expansion directed towards the fibre composite moulding compound (23) of more than 0 %, preferably more than 1 %, and less than 10 %, preferably less than 5 %, in particular less than 2 %, and, as a result of the thermal volume expansion, pressure is exerted on the fibre composite moulding compound (23) and leads to effective impregnation of the fibrous structure with the plastic matrix (27).

12. Method according to one of claims 1 to 11, **characterised in that** the fibre composite component (31) is produced by resin transfer moulding or RTM, the plastic matrix (27) consists of a thermoset plastic, in particular a low-shrinkage epoxy system, and is injected into the cavity (24) of a multi-part RTM mould (20) at a temperature of preferably approximately 60°C and is cured at a temperature of preferably approximately 70 - 80°C, the fibre composite component (31) removed from the mould is subjected to tempering at a temperature of preferably approximately 90 - 110°C and the supporting core (13) is melted out of the fibre composite component (31) during the tempering process.

13. Method according to one of claims 1 to 12, **characterised in that** the fibrous structures are preformed fibre blanks consisting of textile fabrics.

14. Method according to one of claims 1 to 13, **characterised in that** the fibrous structures consist essentially of glass fibres.

15. Method of producing a supporting core (13) for use in a method, in particular resin transfer moulding or RTM, for the production of fibre composite components, **characterised in that** the supporting core (13) is a moulded part which can be melted out above room temperature and is produced by means of plastic deformation from a supporting core moulding compound or a preform (1).

16. Method according to claim 15, **characterised in that** the supporting core (13) is plastically deformed from a preform (1), the preform (1) is preferably cast, in particular into roughly or approximately the final shape of the supporting core (13), and the shape of the preform (1) is preferably selected in such a manner that the flow paths of the material during the plastic deformation are as short as possible and the preform (1) has the same and preferably a greater mass than the supporting core (13) to be produced.

17. Method according to one of claims 15 to 16, **characterised in that** the supporting core moulding compound or the preform (1) is plastically deformed at an average temperature of more than 20°C, preferably more than 35°C, in particular more than 50°C, and lower than the melting temperature, the melting temperature being higher than 50°C.

18. Method according to one of claims 15 to 17, **characterised in that** the supporting core (13) contains wax, preferably natural, chemically modified or synthetic wax, and preferably consists essentially or completely thereof.

19. Method according to one of claims 15 to 18, **characterised in that** the supporting core moulding compound or the preform (1) has a melting temperature of at least 75°C, preferably at least 85°C and in particular at least 90°C, and no more than 130°C, preferably no more than 120°C and in particular no more than 110°C, and the supporting core moulding compound or the preform (1) can be plastically deformed from a temperature of at least 20°C, preferably at least 30°C, in particular at least 50°C, until the melting point is reached.

20. Method according to one of claims 15 to 19, **characterised in that** the supporting core (13) is produced by means of flow moulding and is formed in a compression mould forming a cavity (14), preferably in a multi-part, in particular in a two-part compression mould (10), the preform (1) being inserted into the open cavity (14) and pressed into the contour of the cavity (14) by bringing the compression mould parts (11, 12) together and closing the compression mould (10) so as to give the supporting core (13) its final shape.

21. Method according to one of claims 15 to 20, **characterised in that** the preform (1) is inserted into an open two-part compression mould (10) forming a cavity (14), the compression mould parts forming partial cavities, the cavity (14) reproducing the shape of the hollow space in the intended fibre composite component (31) and the preform (I) being pressed into the contour of the cavity (14) by means of flow moulding by closing the compression mould (10) to form a supporting core (13).

22. Method according to one of claims 15 to 21, **characterised in that** the preform (1) has excess material with respect to the supporting core (13) in its final shape, the excess material can flow out of the cavity (14) through displacement openings (15) during the flow moulding and the cavity (14) contains vent openings (17) for the removal of included air pockets.

23. Device for the production of a supporting core according to claim 15, in which the device is a two-part compression mould (10) forming a closed cavity (14) in the forming position and the cavity (14) reproduces the shape of the hollow space of the fibre composite component (31) to be produced, the compression mould (10) containing displacement openings (15) leading to a displacement chamber (16) for the removal of the excess material of the preform (1) from the cavity (14) during the plastic deformation, **characterised in that** the compression mould (10) additionally contains vent openings (17) for venting included air pockets and the displacement chamber is a displacement channel enclosing the cavity and arranged at the joint between two compression mould halves.

24. One-part fibre composite components (31) produced by the method according to claim 1, **characterised in that** the fibre composite components (31) have a fibre volume content of more than 30 % and contain at least one closed or undercut hollow space (35) and the range of the dimensional tolerances, in particular the wall thicknesses, is less than 5 % in relation to a nominal value.

## Revendications

1. Procédé de fabrication de pièces monolithiques (31) en matériau renforcé par fibres avec au moins une cavité (35) fermée ou à découpe arrière, en particulier un procédé de moulage par transfert de résine ou procédé RTM, dans lequel on réalise un noyau de support (13) à forme stable reproduisant la forme de la cavité (35) dans la pièce en matériau renforcé par fibres (31) et dans lequel on insère au moins une structure de fibres et le noyau de support (13) dans un moule (20) muni d'une cavité de moulage (24) et une matrice en matière plastique (27) fluide, destinée à imprégner la structure de fibres, est injectée dans la cavité de moulage (24) du moule (20) fermé en formant un corps moulé en matériau renforcé par fibres (23) et le corps moulé en matériau renforcé par fibres (23) est durci pour obtenir une pièce en matériau renforcé par fibres (31), le noyau de support (13) étant un corps moulé, qui peut être mis en fusion à une température supérieure à la température ambiante et qui, au cours de la fabrication de la pièce en matériau renforcé par fibres (31), une fois que la pièce en matériau renforcé par fibres (31) a atteint la stabilité de forme, est extrait sous fusion hors de la pièce en matériau renforcé par fibres (31) en laissant place à une cavité (35) fermée ou ouverte à l'arrière, **caractérisé en ce que** le noyau de support (13) est réalisé par formage plastique à partir d'un corps moulé en forme de noyau de support, présentant en soi une stabilité de forme, ou à partir d'une paraison (1).

2. Procédé selon la revendication 1, **caractérisé en ce que** le noyau de support (13) est réalisé par formage plastique à partir d'une paraison (1) et la paraison (1) est de préférence moulée, en particulier moulée sous une forme brute ou grossière de la forme définitive du noyau de support (13), et la forme de la paraison (1) est de préférence choisie de telle sorte que les trajets d'écoulement de la matière pendant le formage plastique sont aussi courts que possible et la paraison (1) possède une masse identique et de préférence supérieure à celle du noyau de support (13) à fabriquer.

3. Procédé selon l'une quelconque des revendications 1 à 2, **caractérisé en ce que** le corps moulé en forme de noyau de support ou la paraison (1) est réalisé par formage plastique à une température moyenne supérieure à 20°C, de préférence supérieure à 35°C, en particulier supérieure à 50°C et inférieure à la température de fusion, la température de fusion étant supérieure à 50°C.

4. Procédé selon l'une quelconque des revendications 1 à 3, **caractérisé en ce que** le noyau de support (13) contient de la cire, de préférence de la cire naturelle, chimiquement modifiée ou synthétique, et de préférence est réalisé en grande partie ou intégralement avec celle-ci.

5. Procédé selon l'une quelconque des revendications 1 à 4, **caractérisé en ce que** le corps moulé en forme de noyau de support ou la paraison (1) possède une température de fusion de 75°C minimum, de préférence 85°C minimum et en particulier 90°C minimum, et de 130°C maximum, de préférence 120°C maximum et en particulier 110°C maximum, et le corps moulé en forme de noyau de support ou la paraison (1) peut être réalisé par formage plastique à partir d'une température de 20°C minimum, de préférence 30°C minimum, en particulier 50°C minimum jusqu'à atteindre la température du point de fusion.

6. Procédé selon l'une quelconque des revendications 1 à 5, **caractérisé en ce que** le noyau de support (13) est réalisé par un procédé de formage par fluage et est formé dans un moule pour moulage sous pression conçu avec une cavité de moulage sous pression (14), de préférence un moule pour moulage sous pression (10) en plusieurs parties, en particulier en deux parties, le corps moulé en forme de noyau de support ou la paraison (1) étant posé dans la cavité de moulage sous pression (14) ouverte, étant comprimé selon le contour de la cavité de moulage sous pression (14) sous l'effet du déplacement des deux parties du moule (11, 12) l'une vers l'autre et de la fermeture du moule pour moulage sous pression (10) et étant moulé pour obtenir la forme définitive d'un noyau de support (13).

7. Procédé selon l'une quelconque des revendications 1 à 6, **caractérisé en ce que** la paraison (1) est posée dans un moule pour moulage sous pression (10) ouvert, en deux parties formant une cavité de moulage sous pression (14), les parties du moule formant des cavités partielles et la cavité de moulage sous pression (14) reproduisant la forme de la cavité dans la pièce en matériau renforcé par fibres (31) prévue, et sous l'effet de la fermeture du moule pour moulage sous pression (10), le corps moulé en forme de noyau de support ou la paraison (1) est comprimé par un processus de formage par fluage selon le contour de la cavité de moulage sous pression (14) et est formé en un noyau de support (13).

8. Procédé selon l'une quelconque des revendications 1 à 7, **caractérisé en ce que** le corps moulé en forme de noyau de support ou la paraison (1) comprend une saillie de matière par rapport à la forme définitive du noyau de support (13) et la saillie de matière pendant le formage par fluage peut s'écouler hors de la cavité de moulage sous pression (14) à travers des orifices d'évacuation (15), et la cavité de moulage sous pression (14) comprend des orifices de ventilation (17) pour l'évacuation de poches d'air incluses.

9. Procédé selon l'une quelconque des revendications 1 à 8, **caractérisé en ce qu'**une paraison (1) est à nouveau moulée à partir du noyau de support (13) extrait sous fusion et la matière en fusion du noyau de support (13) extrait est acheminée directement dans un moule (40) pour réaliser une nouvelle paraison (1).

10. Procédé selon l'une quelconque des revendications 1 à 9, **caractérisé en ce que** la température moyenne du noyau de support (13) pendant l'injection de la matrice en matière plastique (27) dans le moule (20) diffère de moins de ± 6°C, de préférence de moins de ± 4°C, en particulier de moins de ± 2°C de la température moyenne du corps moulé en forme de noyau de support ou de la paraison (1) pendant le formage plastique, ou la température moyenne du noyau de support (13) pendant l'injection de la matrice en matière plastique (27) dans le moule (20) est égale à la température moyenne du corps moulé en forme de noyau de support ou de la paraison (1) pendant le formage plastique.

11. Procédé selon l'une quelconque des revendications 1 à 10, **caractérisé en ce que** la température moyenne du noyau de support (13) pendant l'injection de la matrice en matière plastique (27) dans le moule (20) est supérieure de moins de 6°C, de préférence de moins de 4°C, en particulier de moins de 3°C et de plus de 0°C, de préférence de plus de 1°C, en particulier de plus de 2°C à la température moyenne du corps moulé en forme de noyau de support ou de la paraison (1) pendant le formage plastique, et le noyau de support (13) pendant ou après l'injection de la matrice en matière plastique (27) est chauffé et subit une dilatation thermique orientée vers le corps moulé en matériau renforcé par fibres (23), de plus de 0 %, de préférence de plus de 1 % et de moins de 10 %, de préférence de moins de 5 %, en particulier de moins de 2 %, et, sous l'effet de la dilatation thermique, une pression est exercée sur le corps moulé en matériau renforcé par fibres (23), qui entraîne une imprégnation efficace de la structure de fibres avec la matrice en matière plastique (27).

12. Procédé selon l'une quelconque des revendications 1 à 11, **caractérisé en ce que** la pièce en matériau renforcé par fibres (31) est réalisée par un procédé de moulage par transfert de résine ou procédé RTM, et la matrice en matière plastique (27) est une matière plastique thermodurcissable, en particulier un système de résine époxy à faible retrait et est injectée avec une température, de préférence de 60°C environ, dans la cavité de moulage RTM (24) d'un moule RTM (20) en plusieurs parties et est durcie à une température de préférence de 70 à 80°C environ, et la pièce en matériau renforcé par fibres (31) démoulée est étuvée après cuisson à une température de préférence de 90 à 110°C et, pendant l'étuvage après cuisson, le noyau de support (13) est extrait sous fusion hors de la pièce en matériau renforcé par fibres (31).

13. Procédé selon l'une quelconque des revendications 1 à 12, **caractérisé en ce que** les structures de fibres sont des ébauches de fibres préformées dans des structures textiles planes.

14. Procédé selon l'une quelconque des revendications 1 à 13, **caractérisé en ce que** les structures de fibres sont réalisées sensiblement dans des fibres de verre.

15. Procédé de fabrication d'un noyau de support (13) destiné à être utilisé dans un procédé de fabrication de pièces en matériau renforcé par fibres, en particulier dans un procédé de moulage par transfert de résine ou procédé RTM, **caractérisé en ce que** le noyau de support (13) est un corps moulé pouvant être extrait sous fusion à une température supérieure à la température ambiante et est réalisé par formage plastique à partir d'un corps moulé en forme de noyau de support ou d'une paraison (1).

16. Procédé selon la revendication 15, **caractérisé en ce que** le noyau de support (13) est réalisé par formage plastique à partir d'une paraison (1) et la paraison (1) est de préférence moulée, en particulier moulée avec une forme brute ou grossière de la forme définitive du noyau de support (13), et la forme de la paraison (1) est de préférence choisie de telle sorte que les trajets d'écoulement de la matière pendant le formage plastique sont aussi courts que possible et la paraison (1) possède une masse identique et de préférence supérieure à celle du noyau de support (13) à fabriquer.

17. Procédé selon l'une quelconque des revendications 15 à 16, **caractérisé en ce que** le corps moulé en forme de noyau de support ou la paraison (1) est réalisé par formage plastique à une température moyenne supérieure à 20°C, de préférence supérieure à 35°C, en particulier supérieure à 50°C et inférieure à la température de fusion, la température de fusion étant supérieure à 50°C.

18. Procédé selon l'une quelconque des revendications 15 à 17, **caractérisé en ce que** le noyau de support (13) contient de la cire, de préférence de la cire naturelle, chimiquement modifiée ou synthétique, et de préférence est réalisé en grande partie ou intégralement avec celle-ci.

19. Procédé selon l'une quelconque des revendications 15 à 18, **caractérisé en ce que** le corps moulé en forme de noyau de support ou la paraison (1) possède une température de fusion de 75°C minimum, de préférence 85°C minimum et en particulier 90°C minimum, et de 130°C maximum, de préférence 120°C maximum et en particulier 110°C maximum, et le corps moulé en forme de noyau de support ou la paraison (1) peut être réalisé par formage plastique à partir d'une température de 20°C minimum, de préférence 30°C minimum, en particulier 50°C minimum jusqu'à atteindre la température du point de fusion.

20. Procédé selon l'une quelconque des revendications 15 à 19, **caractérisé en ce que** le noyau de support (13) est réalisé par un procédé de formage par fluage et est formé dans un moule pour moulage sous pression conçu avec une cavité de moulage sous pression (14), de préférence un moule pour moulage sous pression (10) en plusieurs parties, en particulier en deux parties, le corps moulé en forme de noyau de support ou la paraison (1) étant posé dans la cavité de moulage sous pression (14) ouverte, étant comprimé selon le contour de la cavité de moulage sous pression (14) sous l'effet du déplacement des deux parties du moule (11, 12) l'une vers l'autre et de la fermeture du moule pour moulage sous pression (10) et étant moulé pour obtenir la forme définitive d'un noyau de support (13).

21. Procédé selon l'une quelconque des revendications 15 à 20, **caractérisé en ce que** la paraison (1) est posée dans un moule pour moulage sous pression (10) ouvert, en deux parties formant une cavité de moulage sous pression (14), les parties du moule formant des cavités partielles et la cavité de moulage sous pression (14) reproduisant la forme de la cavité dans la pièce en matériau renforcé par fibres (31) prévue, et sous l'effet de la fermeture du moule pour moulage sous pression (10), le corps moulé en forme de noyau de support ou la paraison (1) est comprimé par un processus de formage par fluage selon le contour de la cavité de moulage sous pression (14) et est formé en un noyau de support (13).

22. Procédé selon l'une quelconque des revendications 15 à 21, **caractérisé en ce que** le corps moulé en forme de noyau de support ou la paraison (1) comprend une saillie de matière par rapport à la forme définitive du noyau de support (13) et la saillie de matière pendant le formage par fluage peut s'écouler hors de la cavité de moulage sous pression (14) à travers des orifices d'évacuation (15), et la cavité de moulage sous pression (14) comprend des orifices de ventilation (17) pour l'évacuation de poches d'air incluses.

23. Dispositif de fabrication d'un noyau de support selon la revendication 15, le dispositif étant un moule pour moulage sous pression (10) en deux parties, formant dans la position de formage une cavité de moulage sous pression (14) fermée et la cavité de moulage sous pression (14) reproduit la forme de la cavité dans la pièce en matériau renforcé par fibres (31), le moule pour moulage sous pression (10) étant muni d'orifices d'évacuation (15) communiquant avec une chambre d'évacuation (16) pour évacuer 1a matière excédentaire de la paraison (1) hors de la cavité de moulage sous pression (14) pendant le formage plastique, **caractérisé en ce que** le moule pour moulage sous pression (10) comprend en plus des orifices de ventilation (17) pour évacuer les poches d'air incluses et la chambre d'évacuation est un canal d'évacuation, qui entoure de manière fermée la cavité de moulage et qui est agencé au niveau de la jonction entre les deux moitiés du moule pour moulage sous pression.

24. Pièces monolithiques (31) en matériau renforcé par fibres, fabriquées par le procédé selon la revendication 1, **caractérisées en ce que** les pièces en matériau renforcé par fibres (31) possèdent une teneur volumétrique de fibres supérieure à 30 % et contiennent au moins une cavité (35) fermée ou à découpe arrière et la largeur de fourchette des tolérances de forme et des tolérances dimensionnelles, en particulier les épaisseurs de paroi, est inférieure à 5 % par rapport à une valeur de cote nominale.
